# EUROPÄISCHE PATENTSCHRIFT

(11) **EP 3 611 236 B1**
(45) Veröffentlichungstag und Bekanntmachung des Hinweises auf die Patenterteilung: **30.09.2020**
(21) Anmeldenummer: 18189502.0
(22) Anmeldetag: 17.08.2018
(51) Int. Cl.: C09D 183/08, C08L 83/08

(54) **EINE WÄSSRIGE, LAGERSTABILE ZUSAMMENSETZUNG, DIE N-BENZYL-SUBSTITUIERTE N-(2-AMINOETHYL)-3-AMINOPROPYLSILOXAN-HYDROCHLORIDE ENTHÄLT, VERFAHREN ZU DEREN HERSTELLUNG UND DEREN VERWENDUNG**
AN AQUEOUS, STORAGE-STABLE COMPOSITION CONTAINING N-BENZYL SUBSTITUTED N- (2-AMINOETHYL)-3-AMINOPROPYLSILOXANE-HYDROCHLORIDES, METHOD FOR THEIR PREPARATION AND THEIR USE
COMPOSITION STABLE AU STOCKAGE, AQUEUSE, CONTENANT DU N-(2-AMINOÉTHYL)-3-AMINOPROPYLSILOXANE CHLORHYDRATES SUBSTITUÉS PAR N-BENZYLE, LEUR PROCÉDÉ DE PRODUCTION ET D'UTILISATION

(43) Veröffentlichungstag der Anmeldung: 19.02.2020
(73) Patentinhaber: Evonik Operations GmbH, 45128 Essen (DE)
(72) Erfinder: WASSMER, Christian, 79688 Haussen (DE); BIGGS, Tim, 79618 Rheinfelden (DE); ASAL, Julian, 79618 Rheinfelden (DE)
(74) Vertreter: Evonik Patent Association

(56) Entgegenhaltungen:
- EP-A2- 0 590 270
- WO-A1-2005/118599
- CN-A- 101 353 480
- DE-A1-102004 001 368
- JP-A- H07 258 415

## Beschreibung

Gegenstand der vorliegenden Erfindung ist eine wässrige, VOC-arme, lagerstabile Zusammensetzung, die N-Benzyl-substituierte N-(2-Aminoethyl)-3-aminopropylsiloxan-Hydrochloride enthält, Verfahren zur Bereitstellung einer solchen Zusammensetzung sowie deren Verwendung.

Es ist lange bekannt wässrige Hydrolysate bzw. Kondensate aus Alkoxysilanen, insbesondere auf Basis von Aminoalkylalkoxysilanen, herzustellen (u. a. EP 0 675 128 B1, EP 0 716 127 A2,
EP 0 716 128 B1, EP0 832 911 B1, EP 0 953 591 B1, EP 1 031 593 B1, EP 1 773 917 B1).

EP 0 590 270 A2 und WO 2005/118599 A1 offenbaren Zusammensetzungen und Verfahren zur Herstellung alkoholischer Lösungen von Organosilanpolykondensaten. Wässrige Lösungen von N-(N-Benzyl-2-aminoethyl)-3-aminopropyltrimethoxysilan-Hydrochlorid sind gemäß EP 0 590 270 A2 nicht stabil, bei Zugabe von Wasser resultiert eine inhomogene, trübe Lösung.

Es ist bekannt ein in Wasser lösliches Hydrolysat aus N-(N-Benzyl-2-aminoethyl)-3-amino-propyltrimethoxysilan unter Zusatz von Essigsäure und Abtrennen von Methanol-Anteilen herzustellen, vgl. Beispiel 7 in EP 0 716 127 A2, und beispielsweise als Haftvermittler zu verwenden.

Das N-(N-Vinylbenzyl-2-aminoethyl)-3-aminopropyltrimethoxysilan-Hydrochlorid ist ebenfalls bekannt, u. a. aus Plueddemann, 39th Annual Confernce, Reinforced Plastics/Composites Institute, The Society of the Plastic Industry, Inc. January 16-19, 1984, Session 4-C, Pages 1-4;
US 4,902,556, US 4,849,294, US 4,382,991, US 4,330,444, DE 28 02 242, JP 2000-230148 A2. EP 0 338 128, EP 0 353 766.

Für viele Applikationen werden zunehmend wässrige, VOC-arme, nach Möglichkeit farblose und lagerstabile Produkte mit einem möglichst hohen Wirkstoffgehalt gefordert.

Es bestand daher die Aufgabe, eine möglichst farblose und lagerstabile, insbesondere ohne Ausfällungen bei höherer Lagertemperatur, VOC-arme, wässrige Zusammensetzung mit einem möglichst hohen Wirkstoffgehalt auf der Basis N-(N-Benzyl-2-aminoethyl)-3-aminopropyl-trimethoxysilan-Hydrochlorid und einem Gehalt an freiem Methanol von ≤ 0,5 Gew.-% bereitzustellen.

Die Aufgabe wird erfindungsgemäß entsprechend den Merkmalen in den Patentansprüchen gelöst.

So wurde in überraschender Weise gefunden, dass man eine wässrige, VOC-arme Zusammensetzung mit einem vorteilhaft hohen Wirkstoffanteil bis 60 Gew.-%, d.h. N-Benzyl-substituierte N-(2-Aminoethyl)-3-aminopropylsiloxan-Hydrochloride [hier und nachfolgend auch kurz Wirkstoff genannt] vorteilhaft bereitstellen kann, die im Wesentlichen Methanol freie, d. h. eine Gehalt an Methanol von ≤ 0,5 Gew.-% aufweisen, und bei Raumtemperatur über mindestens 1 Jahr lagerstabile ist. Darüber hinaus zeigen vorliegende Zusammensetzungen auch bei höheren Lagertemperaturen keine Ausfällungen, sind klar und -falls erforderlich- praktisch in jedem Verhältnis mit Wasser vorteilhaft verdünnbar. Ferner sind vorliegende Zusammensetzung im Wesentlich farblos mit einer Farbzahl ≤ 1 Gardner. Darüber hinaus sind vorliegende Zusammensetzungen VOC-arm, da sie praktisch vollständig hydrolysiert sind, d. h. dass die darin enthaltenen Wirkstoffe, N-Benzyl-substituierten N-(2-Aminoethyl)-3-amino-propylsiloxan-Hydrochloride, nach chemischem Verständnis im Wesentlichen keine Methoxygruppen mehr aufweisen.

Zur Herstellung vorliegender Zusammensetzung geht man vorteilhaft gemäß der nachfolgenden Verfahrensvarianten A sowie B vor:
So kann man die Verfahrensvariante A vorteilhaft ausführen indem man
   - in Schritt 1 N-(2-Aminoethyl)-3-aminopropyltrimethoxysilan mit 1,15 bis 1,25 Mol Wasser pro Mol Si, vorzugsweise 1,2 Mol Wasser pro Mol Si, bei einer Sumpftemperatur beginnend von Raumtemperatur bis 60 °C in Anwesenheit von 25 bis 30 Gew.-% Methanol, vorzugsweise 27 Gew.-% Methanol, bezogen auf die vorliegenden Einsatzstoffe N-(2-Aminoethyl)-3-aminopropyltrimethoxysilan und Wasser, gezielt hydrolysiert,
   - direkt im Anschluss daran in Schritt 2 dem in Schritt 1 erhaltene Hydrolysat mit Benzylchlorid, vorzugsweise 1 Mol Benzylchlorid pro Mol N-(2-Aminoethyl)-3-aminopropyltrimethoxysilan, bei einer Sumpftemperatur von 58 bis 60 °C umsetzt und anschließend konzentrierte Salzsäure, vorzugsweise 0,9 bis 1,0 Mol HCl pro Mol Si, zusetzt und
   - nachfolgend in Schritt 3 das in Schritt 2 erhaltene Produktgemisch unter vermindertem Druck und unter Zusatz einer definierten Menge Wasser, vorzugsweise 1,35 g Wasser pro 1,0 g des in Schritt 1 eingesetzten Silans, Methanol sowie ggf. unter den Destillationsbedingungen ebenfalls flüchtige Anteile aus dem Produktgemisch abdestilliert, vorzugsweise bei einem Absolutdruck von 303 mbar bis 111 mbar und einer Sumpftemperatur von 43 bis 51°C, wobei man gleichzeitig Wasser bis zu einer Menge in den Destillationssumpf nachdosiert, wie flüchtige Anteile über Kopf abgeführt werden.
Verfahrensvariante B kann man vorteilhaft ausführen indem man
   - eine N-(N-Benzyl-2-aminoethyl)-3-aminopropyltrimethoxysilan-Hydrochlorid enthaltende methanolische Lösung vorlegt, konzentrierte Salzsäure in einem Gewichtsverhältnis N-(N-Benzyl-2-aminoethyl)-3-aminopropyltrimethoxysilan-Hydrochlorid zu konzentrierter Salzsäure von 4 bis 2 zu 1, vorzugsweise 3,8 zu 1, bei einer Temperatur von Raumtemperatur bis 60 °C innerhalb von 20 bis 40 Minuten unter Durchmischung zusetzt, anschließend Wasser in einer Menge von 1 bis 2 Mol Wasser pro Mol N-(N-Benzyl-2-aminoethyl)-3-aminopropyl-trimethoxysilan-Hydrochlorid zügig innerhalb von 1 bis 5 Minuten unter Durchmischung dosiert und bei einer Sumpftemperatur von 40 bis 55 °C und einem vermindertem Druck von 280 bis 120 mbar flüchtige Anteile aus dem Produktgemisch destillativ entfernt, wobei man gleichzeitig Wasser bis zu einer Menge in den Destillationssumpf nachdosiert, wie flüchtige Anteile über Kopf abgeführt werden.

Gemäß der Verfahrensvarianten A oder B erhaltene Zusammensetzungen fallen geeigneterweise als Sumpfprodukt in der Destillationseinheit an und stellen eine wässrige, VOC-arme Zusammensetzung mit einem Wirkstoffgehalt von ≤ 60 Gew.-%, beispielsweise ≥ 40 bis 60 Gew.-% oder 45 bis 60 Gew.-%, um nur einige Beispiele anzuführen, bei einem Gehalt an Wasser von ≥ 40 Gew.-%, bevorzugt von ≥ 40 bis ≤ 60 Gew.-%, und einem Gehalt an Methanol von ≤ 0,5 Gew.-% dar, wobei die Komponenten in der Zusammensetzung in Summe 100 Gew.-% ergeben. Ferner weisen so erhaltene Zusammensetzungen vorteilhaft eine Viskosität von ≥ 50 bis ≤ 300 mPas (bei 20 °C), einen pH-Wert von ≥ 2 bis ≤ 4 und eine Farbzahl ≤ 1 Gradner auf, sind darüber hinaus klar, über mindestens 1 Jahr bei Raumtemperatur lagerstabil und praktisch in jedem Verhältnis mit Wasser mischbar. Darüber hinaus zeigen so erhaltene Zusammensetzung auch bei höheren Lagertemperaturen praktisch keine Ausfällungen.

Daher ist Gegenstand der vorliegenden Erfindung eine wässrige Zusammensetzung, die N-Benzyl-substituierte N-(2-Aminoethyl)-3-aminopropylsiloxan-Hydrochloride enthält, wobei die Zusammensetzung nach Lagerung über 6 Wochen bei 60 °C eine Farbzahl ≤ 1 Gardner [ISO 6274], einen Gehalt an Methanol von < 0,5 Gew.-% und einen Wirkstoffgehalt von ≤ 60 Gew.-% bei einem Gehalt an Wasser von ≥ 40 bis ≤ 60 Gew.-% aufweist, wobei die Komponenten in der Zusammensetzung in Summe 100 Gew.-% ergeben.

Darüber hinaus zeichnen sich erfindungsgemäße Zusammensetzungen vorteilhaft auch dadurch aus, dass sie über mindestens 12 Monaten bei Raumtemperatur lagerstabil sind und eine Farbzahl ≤ 1 Gardner, eine Viskosität von ≥ 50 bis ≤ 300mPas (bei 20 °C) sowie einen pH-Wert pH-Wert ≥ 2 bis ≤ 4 aufweisen.

Erfindungsgemäße Zusammensetzungen enthalten als so genannten Wirkstoff vorteilhaft N-Benzyl-substituierte N-(2-Aminoethyl)-3-aminopropylsiloxan-Hydrochloride als ein Gemisch aus Isomeren N-Benzyl-substituierte N-(2-Aminoethyl)-3-aminopropylsiloxanen, wobei mindestens eine der Isomeren N-Benzyl-substituierter N-(2-aminoethyl)-3-aminopropylsiloxane der Formel I genügt

HO_{(1-y)}(RO)_{y}[(A)SiO(OH)_{(1-z)}(OR)_{z}]ₓ-R (I),

wobei R für Methyl oder Ethyl steht, x≥1 und y = 0 oder 1 und z = 0 oder 1 sind mit der Maßgabe (y+z)≤1 und A eine Aminoalkylgruppe gemäß Formel II darstellt

[-(CH₂)₃N(H₍₁₋ₐ₎R¹ₐ)(CH₂)₂(NH_{[2-(b+c)]}R²bR³_{c})]·(HCl)_{d} (II)

mit a = 0 oder 1 und b = 0 oder 1 oder c = 0 oder 1 und der Maßgabe (b+c) = 0 oder 1 oder 2, wobei Gruppen R¹, R² und R³ für Benzyl stehen, und d = 0 oder 1 oder 2 oder 3 ist.

Erfindungsgemäße Zusammensetzungen können beispielsweise -aber nicht ausschließlich- eine Verteilung der Wirkstoff- bzw. Oligomere aufweisen:

| Verbindungen gemäß Formel I sowie II mit | Mol % |
|---|---|
| Typ A: a = 0, b = 0, c = 0 | 37,4 |
| Typ B: a = 1, b = 0, c = 0 | 18,8 |
| Typ C: a = 0, b = 0, c = 1 | 18,9 |
| Typ D: a = 1, b = 0, c = 1 | 8,4 |
| Typ E: a = 0, b = 1, c = 1 | 4,8 |
| Typ F: a = 1, b = 1, c = 1 | 11,7 |

So kann beispielsweise -aber nicht ausschließlich- eine erfindungsgemäße Zusammensetzung vorzugsweise an Wasser 40 bis 60 Gew.-% und Wirkstoff mit einer Wirkstoffverteilung bzgl. Typ A von 37,4 Mol.-%, Typ B von 18,8 Mol.-%, Typ C von 18,9 Mol.-%, Typ D von 8,4 Mol.-%, Typ E von 4,8 Mol.-% sowie Typ F von 11,7 Mol.-% enthalten, wobei alle Komponenten der Zusammensetzung in Summe 100 Gew.-% ergeben.

Ferner ist Gegenstand der vorliegenden Erfindung ein Verfahren zur Herstellung einer erfindungsgemäßen Zusammensetzung, indem
man gemäß der Verfahrensvariante A
- in Schritt 1 N-(2-Aminoethyl)-3-aminopropyltrimethoxysilan mit 1,15 bis 1,25 Mol Wasser pro Mol Si, vorzugsweise 1,2 Mol Wasser pro Mol Si, bei einer Sumpftemperatur beginnend von Raumtemperatur bis 60 °C in Anwesenheit von 25 bis 30 Gew.-% Methanol, vorzugsweise 27 Gew.-% Methanol, bezogen auf die vorliegenden Einsatzstoffe N-(2-Aminoethyl)-3-aminopropyltrimethoxysilan und Wasser, gezielt hydrolysiert,
- direkt im Anschluss daran in Schritt 2 dem in Schritt 1 erhaltene Hydrolysat mit Benzylchlorid, vorzugsweise 1 Mol Benzylchlorid pro Mol N-(2-Aminoethyl)-3-aminopropyltrimethoxysilan, bei einer Sumpftemperatur von 58 bis 60 °C umsetzt und anschließend konzentrierte Salzsäure, vorzugsweise 0,9 bis 1,0 Mol HCl pro Mol Si, zusetzt und
- nachfolgend in Schritt 3 das in Schritt 2 erhaltene Produktgemisch unter vermindertem Druck und unter Zusatz einer definierter Mengen Wasser, vorzugsweise 1,35 g Wasser pro 1,0 g des in Schritt 1 eingesetzten Silans, Methanol sowie ggf. unter den Destillationsbedingungen ebenfalls flüchtige Anteile aus dem Produktgemisch abdestilliert, vorzugsweise bei einem Absolutdruck von 303 mbar bis 111 mbar und einer Sumpftemperatur von 43 bis 51 °C, wobei man gleichzeitig Wasser bis zu einer Menge in den Destillationssumpf nachdosiert, wie flüchtige Anteile über Kopf abgeführt werden
   oder
   man gemäß Verfahrensvariante B
- eine N-(N-Benzyl-2-aminoethyl)-3-aminopropyltrimethoxysilan-Hydrochlorid enthaltende methanolische Lösung vorlegt, konzentrierte Salzsäure in einem Gewichtsverhältnis N-(N-Benzyl-2-aminoethyl)-3-aminopropyltrimethoxysilan-Hydrochlorid zu konzentrierter Salzsäure von 4 bis 2 zu 1, vorzugsweise 3,8 zu 1, bei einer Temperatur von Raumtemperatur bis 60 °C innerhalb von 20 bis 40 Minuten unter Durchmischung zusetzt, anschließend Wasser in einer Menge von 1 bis 2 Mol Wasser pro Mol N-(N-Benzyl-2-aminoethyl)-3-aminopropyl-trimethoxysilan-Hydrochlorid zügig innerhalb von 1 bis 5 Minuten unter Durchmischung dosiert und bei einer Sumpftemperatur von 40 bis 55 °C und einem vermindertem Druck von 280 bis 120 mbar flüchtige Anteile aus dem Produktgemisch destillativ entfernt, wobei man gleichzeitig Wasser bis zu einer Menge in den Destillationssumpf nachdosiert, wie flüchtige Anteile über Kopf abgeführt werden,
und
man gemäß der Verfahrensvarianten A oder B im Sumpf der Destillatonseinheit eine wässrige, VOC-arme Zusammensetzung mit einem Wirkstoffgehalt von ≤ 60 Gew.-% bei einem Gehalt an Wasser von ≥ 40 bis ≤ 60 Gew.-% und einem Gehalt an Methanol von ≤ 0,5 Gew.-% erhält, wobei die Komponenten in der Zusammensetzung in Summe 100 Gew.-% ergeben und die Zusammensetzung eine Viskosität von ≥ 50 bis ≤ 300 mPas (bei 20 °C), einen pH-Wert von ≥ 2 bis ≤ 4 und eine Farbzahl ≤ 1 Gradner aufweist sowie bei Raumtemperatur über mindestens 1 Jahr lagerstabil ist.

Somit ist ebenfalls Gegenstand der vorliegenden Erfindung eine wässrige Zusammensetzung, die nach dem erfindungsgemäßen Verfahren erhältlich ist bzw. erhalten wird.

Im Allgemeinen kann man das erfindungsgemäße Verfahren wie folgt durchführen:
Für die Durchführung des vorliegenden Verfahrens verwendet man geeigneterweise eine Destillations- bzw. Rektifikationseinheit, die beispielsweise -aber nicht ausschließlich- einen heiz-/kühlbaren Kessel mit Rührvorrichtung und Temperaturüberwachung/-regelung, aufgesetzter Trennkolonne, optional mit Packung, Rücklaufteiler und Vorlagebehälter, Öldrehschieberpumpe sowie Druckmess-/Druckregeleinheit inkl. Kühlfalle umfasst. In einer solchen Reaktionsapparatur kann man die bereits zuvor dargelegten Verfahrensvarianten A und B vorteilhaft ausführen. Darüber hinaus wird auf die nachfolgenden erfindungsgemäßen Ausführungsbeispiele verwiesen.

Erfindungsgemäße Zusammensetzungen bzw. erfindungsgemäß hergestellte bzw. erhaltene Produkte bzw. Lösungen eignen sich vorteilhaft als Haftvermittler, zur Modifizierung von Füllstoffen, Pigmenten und/oder anorganischen Oberflächen, insbesondere zur Füllstoffbeschichtung, Beschichtung von Pigmenten, Beschichtung von anorganischen Oberflächen, als Additiv in Polymeren, in Klebstoffen, in Dichtstoffen, in Faserverbundwerkstoffen, zusammen mit Polymeren, insbesondere Thermoplasten, Duroplasten, Elastomeren, zur Funktionalisierung von Polymeren, zur Einstellung der Hydrophilie von Polymeren, zur Funktionalisierung von Glas, insbesondere zur Funktionalisierung von Glasfasern sowie als Bestandteil einer wässrigen Schlichte für Glasfaseranwendung, auch ohne den Zusatz eines Hydrolysekatalysators.
Die zuvor genannten vorteilhaften Anwendungs- bzw. Verwendungsmöglichkeiten einer erfindungsgemäße Zusammensetzung sind ebenfalls Gegenstand der vorliegenden Erfindung.

Die vorliegende Erfindung wird anhand der nachfolgenden Beispiele näher erläutert, ohne den Gegenstand zu beschränken.

### Beispiele:

### Einsatzstoffe:

- Benzylchlorid: Chlormethylbenzol, Fa. Ineos
- Dynasylan® DAMO: N-(2-Aminoethyl)-3-aminopropyltrimethoxysilan, Resource Efficiency
- Dynasylan® 1160: N-(N-Benzyl-2-aminoethyl)-3-aminopropyltrimethoxysilan (50 Gew.- % in Methanol), Resource Efficiency
- Dynasylan® 1161EQ: N-(N-Benzyl-2-aminoethyl)-3-aminopropyltrimethoxysilan-Hydrochlorid (50 Gew.- % Wirkstoff in Methanol), Resource Efficiency
- Wasser: VE-Wasser
- konz. HCl: konzentrierte Salzsäure (w = 34,8 %), Fa. Roth
- Eisessig: konzentrierte Essigsäure (w > 98 %), Fa. Roth
- Methanol: Methanol reinst, w > 99 %

### Analysenmethoden:

¹³C-NMR- und ¹H-NMR- Bestimmung erfolgte mittels "400MHz Bruker NMR", als Lösemittel wurde CDCl₃ verwendet.
Die Bestimmung der Farbzahlen [Gardner] erfolgte nach ISO 6274.
Die Brechzahlen wurden gemäß DIN 51423 und die Dichten nach DIN 51757 bestimmt.
Die Bestimmung des Gehalts an in der Zusammensetzung erfolgte gemäß SAA 1844.
Die Viskosität angegeben in mPas wurde bei 20 °C gemäß DIN 53015 bestimmt.
Die Dichtebestimmung bei 20 °C und angegeben in [g/cm³] erfolgte gemäß DIN 51757.
Nach DIN 51423 wurde die Brechzahl bestimmt.
Die pH-Wert erfolgte nach DIN 38409-H-1.
Die Prüfung der Lagerstabilität wurde unter beschleunigten Bedingungen bei 60 °C durchgeführt. Dabei wurde die zu prüfende Flüssigkeit in einer Glasflasche (Gasraum mit Stickstoff inertisiert) unter Lichtausschluss in einem Umlufttrockenschrank gelagert. Die Erhöhung der Lagerungstemperatur um jeweils 10 K führt zur Simulation der Verdoppelung der Lagerzeit. Nach der Lagerung wurde die Probe beurteilt und auf analytisch erfassbare Veränderungen wie z. B. Farbzahl untersucht.

### Vergleichsbeispiel 1: (Nachstellung von Beispiel 7 aus EP 0 716 127 A2)

Apparatur: 1 Liter Vierhalskolben mit Destillationsbrücke, Tropftrichter, KPG Rührer, Sumpfthermometer, Ölbad mit Temperaturregelung, Vakuumdrehschieberpumpe, Manometer. 446,7 g Dynasylan® 1161 EQ wurden vorgelegt und bei RT wurde eine Mischung aus 25,0 g VE-Wasser und 49,5 g Eisessig zugetropft. Die Sumpftemperatur stieg auf 38,5 °C an. Anschließend wurde das Hydrolysat mit 375,0 g VE-Wasser verdünnt. Bei einem Absolutdruck von 301 mbar bis 250 mbar wurden insgesamt 370,6 g Destillat abgenommen. Während der Destillation wurde VE-Wasser nachdosiert. Ausbeute: 758,1 g gelbe Flüssigkeit mit einem Wirkstoffgehalt von 28,8 %.

**Analysenergebnisse:**

| Bestimmung | Ergebnis | Methode |
|---|---|---|
| Freies Methanol [Gew.-%] | 2,7 | SAA 1844 |
| Farbzahl [Gardner] | 1 | ISO 6274 |
| Viskosität 20 °C [mPas] | 7,1 | DIN 53015 |
| Dichte (20 °C) [g/cm³] | 1,071 | DIN 51757 |
| Brechzahl | 1,3931 | DIN 51423 |
| pH | 4,6 | DIN 38409-H-1 |

Nach einem Tag Lagerung bei 50 °C zeigte das Produkt Ausfällungen und Bodensatz. Verdünnte man das gemäß Vergleichsbeispiel 1 hergestellte Produkt mit Wasser, z. B. 0,5 bis 2 Gew.-% Produkt in VE-Wasser, wurde das System bereits nach 1 Stunde milchig/trübe.

### Vergleichsbeispiel 2: (Nachstellung von Beispiel 2 aus EP 0 590 270 A2):

Eine gemäß Beispiel 2 aus EP0590270A2 hergestellte Zusammensetzung weist einen Gehalt an Methanol von 59,9 Gew.- % auf.

### Vergleichsbeispiel 3: (Nachstellung von Beispiel 4 aus EP 0 590 270 A2)

Auch eine nach der Lehre aus Beispiel 4 der EP 0 590 270 A2 hergestellte Zusammensetzung weist einen Gehalt an Methanol von 59,9 Gew.-% auf.

### Beispiel 1

Apparatur: 15 Liter Doppelmantelaborreaktor mit Dosierpumpe, Destillationsbrücke, KPG Rührer, Sumpfthermometer, Vakuumdrehschieberpumpe, Manometer, Ölthermostat mit Temperaturregelung.
7.724,7 g Dynasylan® 1161 EQ (50 % Wirkstoffgehalt in Methanol) wurden vorgelegt und 1160,4 g Salzsäure (w = 34,8 %) innerhalb von 26 Minuten zum Dynasylan® 1161 EQ unter Rühren zugesetzt. Dabei stieg die Temperatur auf 51,6 °C. Anschließend wurden innerhalb von 2 Minuten 3.892,1 g Wasser nachdosiert. Bei einer Sumpftemperatur von 41 °C bis 53 °C und einem Absolutdruck von 272 mbar bis 141 mbar wurden insgesamt 8.759,8g Destillat abgenommen. Während der Destillation wurde VE-Wasser nachdosiert. Ausbeute: 6.436 g klare gelbliche Flüssigkeit, mit einem Wirkstoffgehalt von 60 Gew.-%.
Das Produkt war > 8 Wochen bei 60 °C lagerstabil.

**Analysenergebnisse:**

| Bestimmung | Ergebnis | Methode |
|---|---|---|
| Freies Methanol [Gew.-%] | 0,1 | SAA 1844 |
| Farbzahl [Gardner] | <1 | ISO 6274 |
| Viskosität 20 °C [mPas] | 163 | DIN 53015 |
| Dichte (20 °C) [g/cm³] | 1,169 | DIN 51757 |
| Brechzahl | 1,4620 | DIN 51423 |
| pH (10% in H₂O) | 2,8 | DIN 38409-H-1 |

| | | |
|---|---|---|
| Farbzahl: < 1 Gardner nach Herstellung < 1 Gardner nach 8 Wochen Lagerung bei 60 °C | | |

Darüber hinaus kann eine gemäß Beispiel 1 erhaltene Zusammensetzung mit Hinblick auf mögliche wässrige Applikationen, z. B. für spezielle Primer-Anwendungen, vorteilhaft nahezu beliebig mit Wasser verdünnt werden, ohne dass dabei eine Trübung auftritt.

### Beispiel 2

Apparatur: 4 Liter Vierhalskolben mit Destillationsbrücke, Tropftrichter, KPG Rührer, Sumpfthermometer, Ölbad mit Temperaturregelung, Vakuumdrehschieberpumpe, Manometer. 889,6 g Dynasylan® DAMO wurden bei Raumtemperatur vorgelegt und 368,0 g Methanol zugerührt. Dabei stieg die Sumpftemperatur von 21 °C auf 37 °C. Anschließend wurden innerhalb von 5 Minuten 86,4 g VE-Wasser zudosiert und 30 Minuten bei 50 °C nachgerührt. Bei einer Sumpftemperatur von 58 °C bis 60 °C wurden 506,4 g Benzylchlorid innerhalb von 2,7 Stunden zugetropft und weitere 5 Stunden bei 58°C bis 60 °C gerührt. Die Analyse der Sumpfprobe ergab einen Gehalt an freiem Benzylchlorid von < 0,1 Gew.-%. Es wurden 228,7 g Salzsäure Konz. (w = 37%) innerhalb von 30 Minuten zugetropft. Anschließend wurde das Reaktionsgemisch mit 1.200 g VE-Wasser verdünnt. Bei einer Sumpftemperatur von 43 °C bis 51 °C und einem Absolutdruck von 300 mbar bis 111 mbar wurden insgesamt 2.075 g Destillat abgenommen. Während der Destillation wurde VE-Wasser nachdosiert. Ausbeute: 2.321 g klare gelbliche Flüssigkeit mit einem Wirkstoffgehalt von 60 Gew.-%. Das Produkt war > 14,5 Wochen bei 60 °C lagerstabil.

**Analysenergebnisse:**

| Bestimmung | Ergebnis | Methode |
|---|---|---|
| Freies Methanol [Gew.-%] | <0,1 | SAA 1844 |
| Farbzahl [Gardner] | 1 | ISO 6274 |
| Viskosität 20 °C [mPas] | 236 | DIN 53015 |
| Dichte (20 °C) [g/cm³] | 1,165 | DIN 51757 |
| Brechzahl | 1,4601 | DIN 51423 |
| pH (10% in H₂O) | 3,2 | DIN 38409-H-1 |

### Beispiel 3

Apparatur: 4 Liter Vierhalskolben mit Destillationsbrücke, Tropftrichter, KPG Rührer, Sumpfthermometer, Ölbad mit Temperaturregelung, Vakuumdrehschieberpumpe, Manometer. 1.112 g Dynasylan® DAMO wurden bei Raumtemperatur vorgelegt und 460 g Methanol zugerührt. Dabei stieg die Sumpftemperatur von 21 °C auf 38 °C. Anschließend wurden bei einer Sumpftemperatur von 58 °C bis 60 °C 633 g Benzylchlorid innerhalb von einer 1,25 Stunden zugetropft und weitere 3 Stunden bei 58°C bis 60 °C gerührt. Die Analyse der Sumpfprobe ergab einen Gehalt an freiem Benzylchlorid von < 0,1 Gew.-%. Bei einer Sumpfttemperatur von 39 °C wurden 456,3g Salzsäure konz. (w = 37 %) innerhalb von 21 Minuten zugetropft. Bei einer Sumpftemperatur von 40 °C bis 57 °C und einem Absolutdruck von 250 mbar bis 180 mbar wurden insgesamt 1.570,1 g Destillat abgenommen. Während der Destillation wurde VE-Wasser nachdosiert. Ausbeute: 2.891,4 g klare gelbliche Flüssigkeit mit einem Wirkstoffgehalt von 60 Gew.-%. Das Produkt war >10 Wochen bei 60 °C lagerstabil

**Analysenergebnisse:**

| Bestimmung | Ergebnis | Methode |
|---|---|---|
| Freies Methanol [%] | 0,4 | SAA1844 |
| Farbzahl [Gardner] | <1 | ISO 6274 |
| Viskosität 20 °C [mPas] | 186 | DIN 53015 |
| Dichte (20 °C) [g/cm³] | 1,167 | DIN 51757 |
| Brechzahl | 1,462 | DIN 51423 |
| pH (10% in H₂O) | 3,3 | DIN 38409-H-1 |

### Beispiel 4

Apparatur: 15 Liter Doppelmantelaborreaktor mit Dosierpumpe, Destillationsbrücke, KPG Rührer, Sumpfthermometer, Vakuumdrehschieberpumpe, Manometer, Ölthermostat mit Temperaturregelung.
5.782,4g g Dynasylan® DAMO wurden vorgelegt und 2.392 g Methanol zugerührt. Dabei steigt die Sumpftemperatur von 21 °C auf 38 °C. Anschließend wurden bei einer Sumpftemperatur von 58 °C bis 60 °C 3.291,6 g Benzylchlorid innerhalb von ca. 6 Stunden zugetropft und weitere 3 Stunden bei 58 °C bis 60 °C gerührt. Die Analyse der Sumpfprobe ergab einen Gehalt an freiem Benzylchlorid von < 0,1 Gew.-%. Bei einer Sumpftemperatur von 25 °C wurden 2.382,1 g Salzsäure konz. (w = 37 %) innerhalb von 3 Stunden zu getropft. Bei einer Sumpftemperatur von 30 °C bis 56 °C und einem Absolutdruck von 250 mbar bis 152 mbar wurden insgesamt 8.149 g Destillat abgenommen. Während der Destillation wurde VE-Wasser nachdosiert. Ausbeute: 14.670 g klare gelbliche Flüssigkeit mit einem Wirkstoffgehalt von 60 Gew.-%.

| Bestimmung | Ergebnis | Methode |
|---|---|---|
| Freies Methanol [%] | 0,2 | SAA 1844 |
| Farbzahl [Gardner] | <1 | ISO 6274 |
| Viskosität 20 °C [mPas] | 249,6 | DIN 53015 |
| Dichte (20 °C) [g/cm³] | 1,167 | DIN 51757 |
| pH (10 % in H₂O) | 3,3 | DIN 38409-H-1 |

| | | |
|---|---|---|
| Farbzahl: <1 Gardner nach Herstellung <1 Gardner nach 3 Wochen Lagerung bei 60 °C <1 Gardner nach 6 Wochen Lagerung bei 60 °C | | |

## Patentansprüche

1. Wässrige Zusammensetzung, die N-Benzyl-substituierte N-(2-Aminoethyl)-3-aminopropyl-siloxan-Hydrochloride enthält, wobei die Zusammensetzung nach Lagerung über 6 Wochen bei 60 °C eine Farbzahl ≤ 1 Gardner, einen Gehalt an Methanol von ≤ 0,5 Gew.-% und einen Wirkstoffgehalt von ≤ 60 Gew.-% bei einem Gehalt an Wasser von ≥ 40 bis ≤ 60 Gew.-% aufweist, wobei die Komponenten in der Zusammensetzung in Summe 100 Gew.-% ergeben.

2. Zusammensetzung nach Anspruch 1, dass der Wirkstoff N-Benzyl-substituierte N-(2-aminoethyl)-3-aminopropylsiloxan-Hydrochloride als ein Gemisch aus Isomeren N-Benzyl-substituierte N-(2-Aminoethyl)-3-aminopropylsiloxanen umfasst, wobei mindestens eine der Isomeren N-Benzyl-substituierter N-(2-Aminoethyl)-3-aminopropylsiloxane der Formel I genügt [kurz auch Wirkstoff genannt]
HO_{(1-y)}(RO)_{y}[(A)SiO(OH)_{(1-z)}(OR)_{z}]ₓ-R (I),
wobei R für Methyl oder Ethyl steht, x≥1 und y = 0 oder 1 und z = 0 oder 1 sind mit der Maßgabe (y+z) ≤1 und A eine Aminoalkylgruppe gemäß Formel II darstellt
[-(CH₂)₃N(H₍₁₋ₐ₎R¹ₐ)(CH₂)₂(NH_{[2-(b+c)}]R²_{b}R³_{c})]·(HCl)_{d} (II)
mit a = 0 oder 1 und b = 0 oder 1 oder c = 0 oder 1 und der Maßgabe (b+c) = 0 oder 1 oder 2, wobei Gruppen R¹, R² und R³ für Benzyl stehen, und d = 0 oder 1 oder 2 oder 3 ist.

3. Zusammensetzung nach Anspruch 1 oder 2, wobei die Zusammensetzung über mindestens 12 Monaten bei Raumtemperatur lagerstabil ist.

4. Zusammensetzung nach einem der vorangehenden Ansprüche, wobei die Zusammensetzung über mindesten 12 Monate bei Raumtemperatur lagerstabil ist und eine Farbzahl ≤ 1 Gardner, eine Viskosität von ≥ 50 bis ≤ 300mPas (bei 20 °C) sowie einen pH-Wert pH-Wert ≥ 2 bis ≤ 4 aufweist.

5. Verfahren zur Herstellung einer Zusammensetzung nach einem der vorgehenden Ansprüche, indem
man gemäß der Verfahrensvariante A
- in Schritt 1 N-(2-Aminoethyl)-3-aminopropyltrimethoxysilan mit 1,15 bis 1,25 Mol Wasser pro Mol Si bei einer Sumpftemperatur beginnend von Raumtemperatur bis 60 °C in Anwesenheit von 25 bis 30 Gew.-% Methanol, bezogen auf die vorliegenden Einsatzstoffe N-(2-Aminoethyl)-3-aminopropyltrimethoxysilan und Wasser, gezielt hydrolysiert,
- direkt im Anschluss daran in Schritt 2 dem in Schritt 1 erhaltene Hydrolysat mit Benzylchlorid, vorzugsweise 1 Mol Benzylchlorid pro Mol N-(2-Aminoethyl)-3-aminopropyltrimethoxysilan, bei einer Sumpftemperatur von 58 bis 60 °C umsetzt und anschließend konzentrierte Salzsäure zusetzt und
- nachfolgend in Schritt 3 das in Schritt 2 erhaltene Produktgemisch unter vermindertem Druck und unter Zusatz einer definierten Menge Wasser, vorzugsweise 1,35 g Wasser pro 1,0 g des in Schritt 1 eingesetzten Silans, Methanol sowie ggf. unter den Destillationsbedingungen ebenfalls flüchtige Anteile aus dem Produktgemisch abdestilliert, wobei man gleichzeitig Wasser bis zu einer Menge in den Destillationssumpf nachdosiert, wie flüchtige Anteile über Kopf abgeführt werden,
oder
man gemäß der Verfahrensvariante B
- eine N-(N-Benzyl-2-aminoethyl)-3-aminopropyltrimethoxysilan-Hydrochlorid enthaltende methanolische Lösung vorlegt, konzentrierte Salzsäure in einem Gewichtsverhältnis N-(N-Benzyl-2-aminoethyl)-3-aminopropyltrimethoxysilan-Hydrochlorid zu konzentrierter Salzsäure von 4 bis 2 zu 1 bei einer Temperatur von Raumtemperatur bis 60 °C innerhalb von 20 bis 40 Minuten unter Durchmischung zusetzt, anschließend Wasser in einer Menge von 1 bis 2 Mol Wasser pro Mol N-(N-Benzyl-2-aminoethyl)-3-aminopropyl-trimethoxysilan-Hydrochlorid zügig innerhalb von 1 bis 5 Minuten unter Durchmischung dosiert und bei einer Sumpftemperatur von 40 bis 55 °C und einem vermindertem Druck von 280 bis 120 mbar flüchtige Anteile aus dem Produktgemisch destillativ entfernt, wobei man gleichzeitig Wasser bis zu einer Menge in den Destillationssumpf nachdosiert, wie flüchtige Anteile über Kopf abgeführt werden,
und
man gemäß der Verfahrensvarianten A oder B im Sumpf der Destillatonseinheit eine wässrige, VOC-arme Zusammensetzung mit einem Wirkstoffgehalt von ≤ 60 Gew.-% bei einem Gehalt an Wasser von ≥ 40 bis ≤ 60 Gew.-% und einem Gehalt an Methanol von ≤ 0,5 Gew.-% erhält, wobei die Komponenten in der Zusammensetzung in Summe 100 Gew.-% ergeben und die Zusammensetzung eine Viskosität von ≥ 50 bis ≤ 300 mPas (bei 20 °C), einen pH-Wert von ≥ 2 bis ≤ 4 und eine Farbzahl ≤ 1 Gradner aufweist sowie bei Raumtemperatur über mindestens 1 Jahr lagerstabil ist.

6. Verfahren nach Anspruch 5, wobei man gemäß der Verfahrensvariante A in Schritt 2 an konzentrierter Salzsäure 0,9 bis 1,0 Mol HCl pro Mol Si zu- bzw. einsetzt.

7. Verfahren nach Anspruch 5, wobei man gemäß der Verfahrensvariante A in Schritt 3 Methanol sowie ggf. unter den Destillationsbedingungen ebenfalls flüchtige Anteile aus dem Produktgemisch bei einem Absolutdruck von 303 mbar bis 111 mbar und einer Sumpftemperatur von 43 bis 51 °C abdestilliert und gleichzeitig Wasser bis zu einer Menge in den Destillationssumpf nachdosiert, wie flüchtige Anteile über Kopf abgeführt werden.

8. Wässrige Zusammensetzung erhältlich nach einem der Ansprüche 5 bis 7.

9. Verwendung einer Zusammensetzung nach mindestens einem der vorangehenden Ansprüche als Haftvermittler, zur Modifizierung von Füllstoffen, Pigmenten und/oder anorganischen Oberflächen, insbesondere zur Füllstoffbeschichtung, Beschichtung von Pigmenten, Beschichtung von anorganischen Oberflächen, als Additiv in Polymeren, in Klebstoffen, in Dichtstoffen, in Faserverbundwerkstoffen, zusammen mit Polymeren, insbesondere Thermoplasten, Duroplasten, Elastomeren, zur Funktionalisierung von Polymeren, zur Einstellung der Hydrophilie von Polymeren, zur Funktionalisierung von Glas, insbesondere zur Funktionalisierung von Glasfasern sowie als Bestandteil einer wässrigen Schlichte für Glasfaseranwendung, auch ohne den Zusatz eines Hydrolysekatalysators.

## Claims

1. Aqueous composition containing N-benzyl-substituted N-(2-aminoethyl)-3-aminopropylsiloxane hydrochlorides, wherein the composition after storage for 6 weeks at 60°C has a colour number of < 1 Gardner, a content of methanol of < 0.5% by weight and an active substance content of < 60% by weight at a content of water of > 40% to < 60% by weight, wherein the components in the composition sum to 100% by weight.

2. Composition according to Claim 1, that the active substance contains N-benzyl-substituted N-(2-aminoethyl)-3-aminopropylsiloxane hydrochlorides as a mixture of isomeric N-benzyl-substituted N-(2-aminoethyl)-3-aminopropylsiloxanes, wherein at least one of the isomeric N-benzyl-substituted N-(2-aminoethyl)-3-aminopropylsiloxanes conforms to formula I [also active substance for short]
HO_{(1-y)}(RO)_{y}[(A)SiO(OH)_{(1-z)}(OR)_{z}]ₓ-R (I),
wherein R represents methyl or ethyl, x >1 and y = 0 or 1 and z = 0 or 1 with the proviso that (y+z) <1 and A represents an aminoalkyl group according to formula II
[-(CH₂)₃N(H₍₁₋ₐ₎R¹ₐ)(CH₂)₂(NH_{[2-(b+c)]}R²_{b}R³_{c})]·(HCl)_{d} (II)
where a = 0 or 1 and b = 0 or 1 or c = 0 or 1 with the proviso that (b+c) = 0 or 1 or 2, wherein groups R¹, R² and R³ represent benzyl and d = 0 or 1 or 2 or 3.

3. Composition according to either of Claims 1 and 2, wherein the composition is storage-stable for at least 12 months at room temperature.

4. Composition according to any of the preceding claims, wherein the composition is storage-stable for at least 12 months at room temperature and has a colour number of ≤ 1 Gardner, a viscosity of > 50 to ≤ 300 mPas (at 20°C) and a pH pH of ≥ 2 to ≤ 4.

5. Process for producing a composition according to any of the preceding claims
which in process variant A comprises
- in step 1 performing a controlled hydrolysis of N-(2-aminoethyl)-3-aminopropyltrimethoxysilane with 1.15 to 1.25 mol of water per mole of Si at a bottoms temperature of from room temperature to 60°C in the presence of 25% to 30% by weight of methanol based on the present input materials N-(2-aminoethyl)-3-aminopropyltrimethoxysilane and water,
- immediately thereafter in step 2 reacting the hydrolysate obtained in step 1 with benzyl chloride, preferably 1 mol of benzyl chloride per mole of N-(2-aminoethyl)-3-aminopropyltrimethoxysilane, at a bottoms temperature of 58°C to 60°C and subsequently adding concentrated hydrochloric acid and
- subsequently in step 3 distillatively removing methanol and any fractions likewise volatile under the distillation conditions from the product mixture obtained in step 2 under reduced pressure and with addition of a defined amount of water, preferably 1.35 g of water per 1.0 g of the silane employed in step 1, wherein water is simultaneously added to the distillation bottoms up to such an amount as volatile fractions are discharged overhead,
or
in process variant B comprises
- initially charging an N-(N-benzyl-2-aminoethyl)-3-aminopropyltrimethoxysilane hydrochloride-containing methanolic solution, adding concentrated hydrochloric acid in a weight ratio of N-(N-benzyl-2-aminoethyl)-3-aminopropyltrimethoxysilane hydrochloride to concentrated hydrochloric acid of 4 to 2 : 1 at a temperature of from room temperature to 60°C over 20 to 40 minutes with commixing and then quickly adding water in an amount of 1 to 2 mol of water per mole of N-(N-benzyl-2-aminoethyl)-3-aminopropyltrimethoxysilane hydrochloride over 1 to 5 minutes with commixing before distillatively removing volatile fractions from the product mixture at a bottoms temperature of 40°C to 55°C and a reduced pressure of 280 to 120 mbar, wherein water is simultaneously added to the distillation bottoms up to such an amount as volatile fractions are discharged overhead,
to
obtain in process variants A or B in the bottom of the distillation unit an aqueous, low-VOC composition having an active substance content of < 60% by weight at a content of water of > 40% to < 60% by weight and a content of methanol of ≤ 0.5% by weight, wherein the components in the composition sum to 100% by weight and the composition has a viscosity of ≥ 50 to ≤ 300 mPas (at 20°C), a pH of ≥ 2 to ≤ 4 and a colour number of < 1 Gardner and is storage-stable for at least 1 year at room temperature.

6. Process according to Claim 5, wherein in process variant A it comprises in step 2 adding/employing concentrated hydrochloric acid in an amount of 0.9 to 1.0 mol of HCl per mole of Si.

7. Process according to Claim 5, wherein in process variant A it comprises in step 3 distillatively removing methanol and any fractions likewise volatile under the distillation conditions from the product mixture at an absolute pressure of 303 mbar to 111 mbar and a bottoms temperature of 43°C to 51°C and simultaneously adding water to the distillation bottoms up to such an amount as volatile fractions are discharged overhead.

8. Aqueous composition obtainable according to any of Claims 5 to 7.

9. Use of a composition according to at least one of the preceding claims as adhesion promoters, for modifying fillers, pigments and/or inorganic surfaces, in particular for filler coating, coating of pigments, coating of inorganic surfaces, as an additive in polymers, in adhesives, in sealing compositions, in fibre composite materials, together with polymers, in particular thermoplastics, thermosets, elastomers, for functionalizing polymers, for adjusting the hydrophilicity of polymers, for functionalizing glass, in particular for functionalizing glass fibres and as a constituent of an aqueous size for glass fibre applications including without addition of a hydrolysis catalyst.

## Revendications

1. Composition aqueuse, qui contient des chlorhydrates de N-(2-aminoéthyl)-3-aminopropylsiloxane substitués par N-benzyle, la composition présentant après stockage au-delà de 6 semaines à 60 °C un indice de couleur ≤ 1 Gardner, une teneur en méthanol ≤ 0,5 % en poids et une teneur en principe actif ≤ 60 % en poids à une teneur en eau de ≥ 40 à ≤ 60 % en poids, les composants dans la composition s'additionnant à 100 % en poids.

2. Composition selon la revendication 1, que le principe actif comprend des chlorhydrates de N-(2-aminoéthyl)-3-aminopropylsiloxane substitués par N-benzyle comme mélange d'isomères de N-(2-aminoéthyl)-3-aminopropylsiloxanes substitués par N-benzyle, au moins un des isomères de N-(2-aminoéthyl)-3-aminopropylsiloxanes substitués par N-benzyle satisfaisant à la formule I [en abrégé également principe actif]
HO_{(1-y)}(RO)_{y}[(A)SiO(OH)_{(1-z)}(OR)_{z}]ₓ-R (I),
R représentant méthyle ou éthyle, x ≥ 1 et y = 0 ou 1 et z = 0 ou 1, étant entendu que (y + z) ≤ 1 et A représentant un groupe aminoalkyle selon la formule II
[-(CH₂)₃H(H₍₁₋ₐ₎R¹ₐ(CH₂)₂(NH_{[2-(b+c)]}R²_{b}R³_{c})]·(HCl)_{d} (II)
avec a = 0 ou 1 et b = 0 ou 1 ou c = 0 ou 1 et étant entendu que (b + c) = 0 ou 1 ou 2, les groupes R¹, R² et R³ représentant benzyle, et d = 0 ou 1 ou 2 ou 3.

3. Composition selon la revendication 1 ou 2, la composition étant stable au stockage pour au moins 12 mois à température ambiante.

4. Composition selon l'une quelconque des revendications précédentes, la composition étant stable au stockage pour au moins 12 mois à température ambiante et présentant un indice de couleur ≤ 1 Gardner, une viscosité ≥ 50 et ≤ 300 mPas (à 20 °C) ainsi qu'une valeur de pH égale à valeur de pH valeur de pH ≥ 2 à ≤ 4.

5. Procédé pour la préparation d'une composition selon l'une quelconque des revendications précédentes, dans lequel
selon la variante de procédé A
- dans une étape 1, on hydrolyse de manière ciblée le N-(2-aminoéthyl)-3-aminopropyltriméthoxysilane avec 1,15 à 1,25 mole d'eau par mole de Si à une température de fond débutant de la température ambiante allant jusqu'à 60 °C en présence de 25 à 30 % en poids de méthanol, par rapport aux matières à traiter présentes N-(2-aminoéthyl)-3-aminopropyltriméthoxysilane et eau,
- directement à la suite, dans une étape 2, on transforme l'hydrolysat obtenu dans l'étape 1 avec du chlorure de benzyle, de préférence 1 mole de chlorure de benzyle par mole de N-(2-aminoéthyl)-3-aminopropyltriméthoxysilane, à une température de fond de 58 à 60 °C et ensuite on ajoute de l'acide chlorhydrique concentré et
- ensuite, dans une étape 3, on distille du méthanol ainsi que des composants également volatils sous les conditions de distillation à partir du mélange de produits obtenu de l'étape 2, sous pression réduite et avec ajout d'une quantité définie d'eau, de préférence 1,35 g d'eau par 1,0 g du silane utilisé dans l'étape 1, où on rajoute en même temps de l'eau dans le fond de distillation correspondant à une quantité équivalente aux composants volatils évacués à la tête,
ou
selon la variante de procédé B
- on dispose une solution méthanolique contenant du chlorhydrate de N-(N-benzyl-2-aminoéthyl)-3-aminopropyltriméthoxysilane, on ajoute de l'acide chlorhydrique concentré en un rapport pondéral de chlorhydrate de N-(N-benzyl-2-aminoéthyl)-3-aminopropyltriméthoxysilane à acide chlorhydrique de 4 à 2 sur 1 à une température de la température ambiante allant jusqu'à 60 °C en 20 à 40 minutes sous agitation, ensuite on dose de l'eau en une quantité de 1 à 2 mole(s) d'eau par mole de chlorhydrate de N-(N-benzyl-2-aminoéthyl)-3-aminopropyltriméthoxysilane rapidement en 1 à 5 minute(s) sous agitation et on élimine par distillation les composants volatils du mélange de produits à une température de fond de 40 à 55 °C sous une pression réduite de 280 à 120 mbars, où on rajoute en même temps de l'eau dans le fond de distillation correspondant à une quantité équivalente aux composants volatils évacués à la tête,
et
on obtient selon les variantes de procédé A et B dans le fond de l'unité de distillation une composition aqueuse, pauvre en COV dotée d'une teneur en principe actif ≤ 60 % en poids à une teneur en eau de ≥ 40 à ≤ 60 % en poids et une teneur en méthanol ≤ 0,5 % en poids, les composants dans la composition s'additionnant à 100 % en poids et la composition présentant une viscosité ≥ 50 et ≤ 300 mPas (à 20 °C), une valeur de pH de ≥ 2 à ≤ 4 et un indice de couleur ≤ 1 Gardner ainsi qu'étant stable au stockage pour au moins 1 année à température ambiante.

6. Procédé selon la revendication 5, où, selon la variante de procédé A, dans l'étape 2, on ajoute, respectivement on utilise de l'acide chlorhydrique concentré à raison de 0,9 à 1,0 mole de HCl par mole de Si.

7. Procédé selon la revendication 5, où, selon la variante de procédé A, dans l'étape 3, on distille du mélange de produits du méthanol ainsi qu'éventuellement des composants également volatils dans les conditions de distillation à une pression absolue de 303 mbars à 111 mbars et à une température de fond de 43 à 51 °C et on rajoute en même temps de l'eau dans le fond de distillation correspondant à une quantité équivalente aux composants volatils évacués à la tête.

8. Composition aqueuse pouvant être obtenue selon l'une quelconque des revendications 5 à 7.

9. Utilisation d'une composition selon au moins l'une des revendications précédentes en tant que promoteur d'adhérence, pour la modification de charges, de pigments et/ou de surfaces inorganiques, en particulier pour le revêtement de charge, le revêtement de pigments, le revêtement de surfaces inorganiques, en tant qu'additif dans des polymères, dans des adhésifs, dans des produits d'étanchéité, dans des produits composites fibreux, conjointement avec des polymères, en particulier des thermoplastes, des duroplastes, des élastomères, pour la fonctionnalisation de polymères, pour l'ajustement de l'hydrophilie de polymères, pour la fonctionnalisation de verre, en particulier pour la fonctionnalisation de fibres de verre ainsi qu'en tant qu'ingrédient d'un enduit aqueux pour une application de fibre de verre, également sans l'ajout d'un catalyseur d'hydrolyse.
